# EUROPEAN PATENT SPECIFICATION

(11) **EP 0 507 548 B1**
(45) Date of publication and mention of the grant of the patent: **04.07.2001**
(21) Application number: 92302828.6
(22) Date of filing: 31.03.1992
(51) Int. Cl.: G06T 15/50, G09B 9/30

(54) **Texture for real time image generation**
Textur für Echtzeit-Bilderzeugung
Texture pour la génération d'images en temps réel

(30) Priority: 05.04.1991 US 680954
(43) Date of publication of application: 07.10.1992
(73) Proprietor: REAL 3D, INC., Orlando, Florida 32826 (US)
(72) Inventor: Steiner, Walter Robert, Ormond Beach, Florida 32174 (US); Chandler, Jimmy Everett, Ponce Inlet, Florida 32019 (US); Ferguson, Robert Lloyd, Flenwood, Florida 32722 (US); Donovan, Kenneth Burton, Daytona Beach, Florida 32115 (US); Ellis, John Ross, Park City, Utah 84060 (US)
(74) Representative: Körber, Wolfhart, Dr.rer.nat.

(56) References cited:
- EP-A- 0 223 160
- EP-A- 0 321 291
- GB-A- 2 051 525
- US-A- 4 549 275
- COMPUTER GRAPHICS, vol.17, no.3, July 1983, USA pages 1 - 11 WILLIAMS 'Pyramidal Parametrics'

## Description

### BACKGROUND OF THE INVENTION

This invention relates to electronic processing systems, and, more particularly, to an electronic system for manipulating electronic data representing digitized characteristics of objects, wherein the data may be obtained from photographs or other image sources that represent, for example, a portion of the earth with associated cultural and man-made features thereof. Such data may be used in conjunction with real time computer image generation for producing texture on the surface of objects to be displayed.

Real time synthesis of visual images by manipulating electronic data indicative of objects to be displayed is typically referred to as computer image generation (CIG), which has been used to provide training cues to operators for both air (flight) and ground operational vehicles. These data include information regarding shape and color of the object, and, for effecting more realistic displays, information relating to texture of the surfaces of the object. CIG is described in U.S. Patent 4,727,365 - Bunker et al, entitled "Advanced Video Object Generator" while texture related references include U.S. Patent 4,692,880 - Merz et al, entitled "Memory Efficient Cell Texturing for Advanced Video Object Generator" typically for a polygon based system; U.S. Patent 4,821,212 - Hertz, entitled "Three-Dimensional Texture Generator for Computed Terrain Images" for grid based systems; U.S. Patent 4,905,164 - Chandler et al, entitled "Method for Modulating Color for Effecting Color Cell Texture"; and U.S. Patent 4,974,176 - Buchner et al, entitled "Microtexture for Close-in Detail", all the foregoing of which are assigned to the same assignee as hereof.

Although such prior CIG systems are deemed adequate for many applications, there are other situations, such as, for example, mission rehearsal, wherein additional features and detail are desired to be displayed in order to provide efficient training cues to an observer/operator. Typically these additional features will include requirements for increased resolution, or detail, of the image displayed. In order to provide such increased resolution it is generally necessary to store and process more electronic data than was required for prior systems.

Texture data are conventionally stored in the form of maps at different levels of detail for a predetermined area. It would be desirable to store efficiently additional texture data and to process efficiently such additional data as may be required for presenting images having higher texture resolution where required, without significantly increasing hardware requirements over those that may be presently used.

Accordingly, it is an object of the present invention to provide a method and apparatus for supplying multiple resolution texture maps whereby on-line texture map memory storage may be conserved.

Another object of the present invention is to provide a method and apparatus for supplying localized areas of high resolution, or finer detail, within an overall gaming area, while having lower resolution for the remainder of the gaming area, wherein texture map memory storage may be conserved.

Yet another object of the present invention is to provide a method and apparatus for dynamically updating on-line texture maps from mass storage to on-line memory of an image generator for real time image generation in order to conserve on-line memory.

### SUMMARY OF THE INVENTION

In accordance with the present invention, in a real-time computer image generation system, apparatus for generating texture of an image of a predetermined portion of a gaming area to be displayed in response to the position of a vehicle within the gaming area comprises first memory storage means for storing texture data representing the gaming area, second memory storage means for storing the predetermined portion of the texture data, third memory storage means for storing at least a part of the predetermined portion of the texture data and processing means for generating the texture of the image from at least a part of the predetermined portion of the texture data.

The apparatus may further include computer means coupled to the first and second memory storage means for determining the predetermined portion of the texture data in response to the maximum viewing distance from the vehicle and/or the speed and direction of the vehicle.

In another aspect of the present invention, in a real-time computer image generation system, a method for storing data representative of texture of an object to be displayed comprises storing a predetermined number of texture cells including first data for describing texture at a first resolution for a prdetermined first area and storing the predetermined number of texture cells including second data for describing texture at a second resolution for a predetermined second area, wherein the first area is less than the second area. The second area may be four times the size of the first area, and the first and second data may be stored in the form of magnetic data.

In yet another aspect of the invention, in a real time computer image generation system, a method for dynamically updating texture data memory so that texture of an image of a predetermined portion of a gaming area may be determined comprises storing in the texture data memory texture data for at least a part of the predetermined portion of the gaming area in response to predetermined characteristics of a reference point, the stored data for generating texture of an image to the displayed, and updating the texture data stored in the texture data memory in response to predetermined characteristics of the reference point.

The predetermined characteristics of the reference point may include position of the reference point within the gaming area, speed of the reference point, direction of movement of the reference point, maximum range of sight in the gaming area from the reference point and combinations thereof. The reference point may be located in or on a vehicle, such as a land one (for example, a car or tank) or an air one (for example, a plane or helicopter), that moves within the gaming area. The step of updating may be performed at predetermined intervals for permitting continuous, or substantially continuous, such as in accordance with the image display update rate, determination of the texture of the image while the reference point is moving within the gaming area. Also, the texture data may be available at a plurality of respective predetermined levels of detail with the step of updating including updating texture data at a higher level of detail at a faster rate than texture data at a lower level of detail.

The features of the invention believed to be novel are set forth with particularity in the appended claims. The invention itself, however, both as to organization and method of operation, together with further objects and advantages thereof, may best be understood by reference to the detailed description taken in connection with the accompanying drawing.

### BRIEF DESCRIPTION OF THE DRAWING

Fig. 1 is a block diagram of a computer image generating system in accordance with the present invention.

Fig. 2 is a schematic representation of a texture memory update scheme in accordance with the present invention.

Fig. 3 is a schematic representation of a texture data storage scheme in accordance with the present invention.

Fig. 4 is a view looking in the direction of the arrow of Fig. 3 that is labelled Fig. 4.

Fig. 5 is a schematic representation of localized areas of higher detail in accordnce with the present invention.

Fig. 6 is another schematic representation of localized areas of high detail in accordance with the present invention.

### DETAILED DESCRIPTION

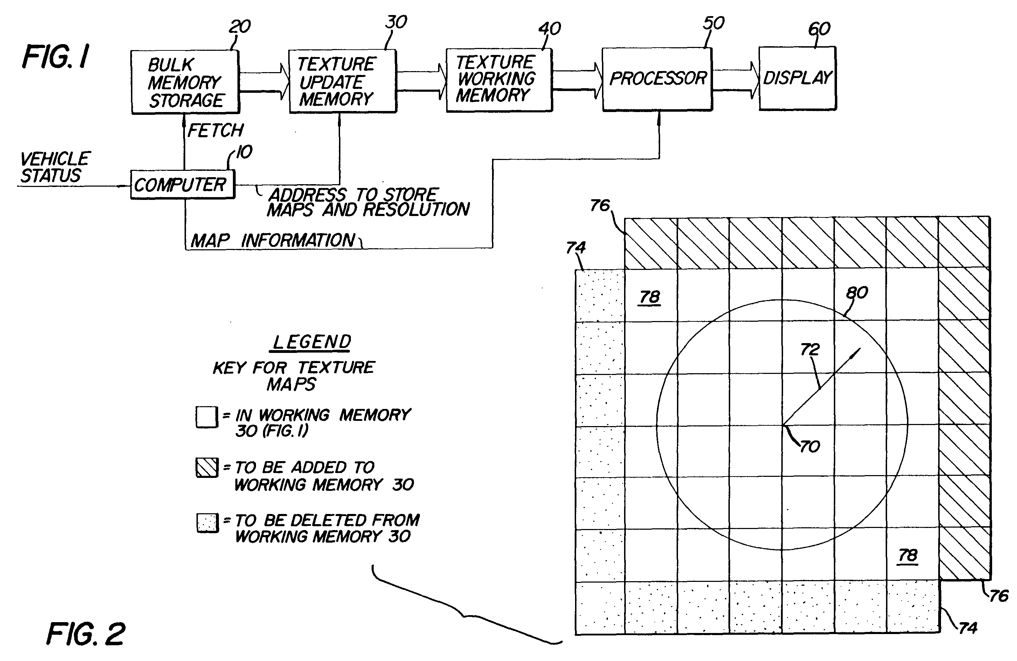

Referring to Fig. 1, a block diagram of a computer image generation system in accordance with the present invention is shown.

The image generation system includes bulk memory storage means 20, such as one or more magnetic disk mass storage memories, for storing texture information of an entire gaming area, texture update memory means 30, such as another magnetic disk mass storage or other type of memory, like a random access memory (RAM), capable of storing texture data to be received at its inputs from corresponding outputs of memory storage means 20, and a host computer 10, such as a general purpose computer, having a respective output connected to each of memory storage means 20 and update memory means 30, and an input for receiving operator inputs and vehicle status information, such as vehicle speed, direction and current position of the vehicle within the gaming area that is represented by the data stored in memory storage means 20. Texture data that is stored in memory storage means 20 may describe either monochromatic, or gray scale, texture, or full color texture.

The image generation system further includes texture working memory means 40, having an input for receiving update texture data from update memory means 30, a texture processor 50, having an input for receiving working texture data from working memory means 40 and another input for receiving texture map information from computer 10, and a display 60 for receiving display texture data from processor 50 and for displaying images including texture in response thereto for the observer/operator. Working memory means 40 may include the same type of memory as does update memory means 30. Texture map informtion that is supplied by computer 10 to processor 50 includes identification of maps that are available in response to vehicle status informtion, and the corresponding texture resolution of the available maps. Processor 50 obtains appropriate texture data from working memory 40 and processes the texture data, such as in accordance with what is described in the previously referenced U.S. Patent 4,727,365.

Connections between components of the computer image generation system have been shown by either a single line that is typically used to refer to serial data transfer or by a symbol representing parallel data transfer. However, the present invention is not to be limited by the type of data transfer shown or used between and among components, while recognizing that one scheme may be more desirable than another based on factors such as the type and amount of data to be transferred, and the time which is allocated to effect such transfer in order to maintain the update rate selected for the image to be displayed. In one common scheme, the image update rate is selected to be thirty frames per second of an interleaved pair of fields, analogous to the current NTSC television standard.

Referring to Fig. 2, a schematic representation of a texture memory update scheme in accordance with the present invention is shown.

Working memory means 40 (Fig. 1) includes a plurality of texture maps 78, representative of a portion of the total gaming area available from memory storage means 20, stored therein for use by processor 50. The actual texture maps 78 that are to be stored in working memory means 40 are determined by computer 10 in response to vehicle status, wherein the vehicle may be represented by a reference or observation point located in or on the vehicle, such as vehicle position 70, vehicle direction 72, vehicle speed and maximum range of visibility from vehicle 70 as represented by circle 80 which is a function of the height of vehicle 70 above the terrain of the gaming area. It is noted that texture maps 78 that are stored in working memory means 40 are adequate to cover views in all directions from vehicle present position 70.

It is also desirable that memory maps 78 for areas beyond visibility range 80 be included in working memory means 40, so that should the direction of vehicle 70 change, processing of texture data by processor 50 may be continued uninterruptedly with data available from maps 78 of working memory means 40, until an update of texture maps 78 for working memory means 40 is able to be effected by computer 10. The amount of data, and therefore the number and location of texture maps 78 beyond visibility range 80 that will be required to be stored in working memory means 40 during any interval between updates will be determined at least in part by the maximum speed attainable by the vehicle. That is, for a rapid, or instantaneous deviation of say, 90° or 180° as a worst case condition from a present direction, texture maps 78 already stored in working memory means 40 should be able to accommodate such deviation while texture maps from update memory means 30 for updating texture maps 78 are being retrieved from bulk memory storage means 20 in response to commands from computer 10 for ultimate transmittal to working memory means 40.

For direction 72 of vehicle 70 that is shown, shaded maps 76 may be dynamically added to working memory 40 before they become visible while speckled maps 74, which are currently in working memory 40, but will exceed visibility range 80 by a predetermined amount, may be deleted from working memory 40. This may be understood as updating texture maps 78 with texture maps 76 that are located in advance of, with respect to vehicle direction 72, a line that is perpendicular to vehicle direction 72, while deleting corresponding texture maps 74 that are located in the opposite direction with respect to the line that is perpendicular to vehicle direction 72.

For effecting dynamic texture map update, computer 10 fetches maps 76 from memory storage 20 for transfer to update memory means 30. Computer 10 also provides to update memory means 30 address information which indicates where in working memory 40 texture maps 78 should be stored. Typically the addresses provided to update memory means 30 will be those of texture maps 74 which are scheduled to be deleted from working memory means 40, thereby executing the storage and deletion in a single step. It is noted that texture maps 78 need not be stored in any particular physical orientation, as long as texture maps 78 may be logically positioned and recalled for achieving the correct orientation within the gaming area.

Update maps 78 from update memory 30 will be transferred to working memory means 40 during intervals when processor 50 is not accessing working memory means 40. Thus, update memory means 30 functions as a temporary storage, or buffer, between bulk memory storage means 20 and working memory means 40, and may not be needed if an appropriate data transfer can be effected between memory storage 20 and working memory means 40 without adversely affecting operation of processor 50 and memory means 40.

In order to accomplish the transfer of large amounts of information that may be required between memory storage means 20 and update memory means 30, and between update memory means 30 and working memory means 40 during dynamic update, a relatively fast communication bus, such as the Intelligent Peripheral Interface bus, which is described in an American National Standards Institute (ANSI) Standard and is rated for 10 megabytes per second, may be used.

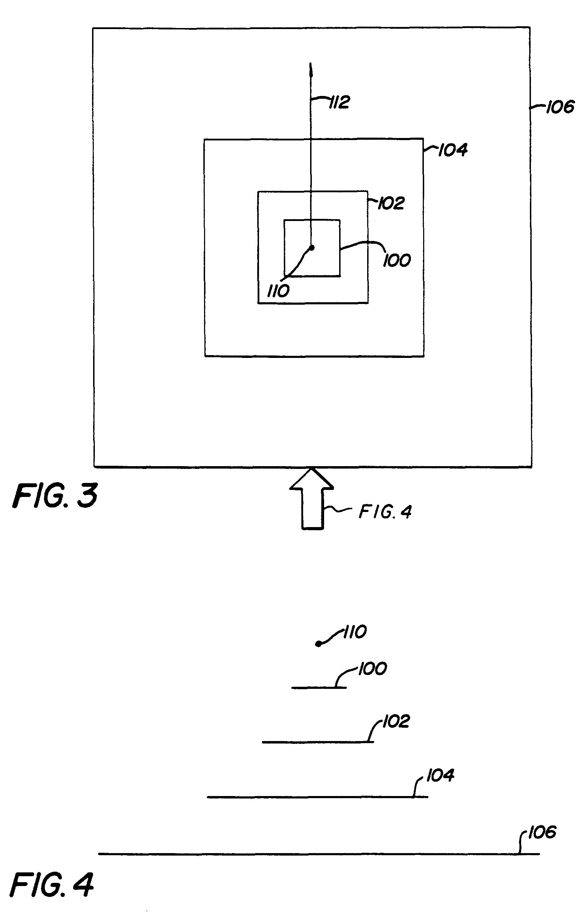

Referring to Figs. 3 and 4, a schematic representation of a texture data storage scheme in accordance with the present invention is shown.

In prior image generation systems, texture data were stored as a plurality of texture maps with each map representing the same area at a respective different level of detail (LOD). This resulted in each LOD describing texture over the same area, with a corresponding lesser amount of data being required for each successive coarser (less detail) LOD. Also, each coarser resolution map was typically derived by some form of filtering of a higher resolution map, which generally meant that if data for one map of a group were desired to be changed, then corresponding data for all maps within the group would have to be changed. The time required for such changing of data makes this technique for texture data storage unsuitable for representing large gaming areas and very high resolution texture data.

For example, in accordance with these prior systems one foot resolution for a predetermined area at an LOD may be represented by x amount of data, or number of cells, two foot resolution for the same predetermined area at a next coarser LOD may be represented by x/4 amount of data, or number of cells, four foot resolution for the same predetermined area at a next coarser LOD may be represented by x/16 amount of data, or number of cells. This pattern may be extended for additional LOD's, and/or a different starting resolution, either less than or greater than one foot, may be selected for the first or finest resolution LOD. Texture data storage in accordance with this prior storage technique is illustrated in Fig. 4 of previously referenced U.S. Patent 4,692,880.

In contrast, in accordance with the present invention, for the texture data storage hierarchy, each layer 100, 102, 104, 106, which may include one or more data maps of texture data (which is analogous to the prior level of detail) is described with the same amount of texture data or number of cells, but the area being described by the stored texture data increases accordingly. This results in a pyramidal type storage scheme as shown in Fig. 3. For example, if texture data of Fig. 3 represents terrain texture of a portion of the earth, then layers 100, 102, 104 and 106 are shown as they would be logically represented (and stored) from a position 110 high above the earth and looking directly down onto the earth. Each layer may include a grid of texture maps at the same resolution.

Fig. 4 shows the texture layers looking in the direction of the arrow of Fig. 3 that is labelled Fig. 4. For ease of understanding, texture layers 100, 102, 104 and 106 are shown spaced from each other, it being understood that when texture in response to the texture data of such layers is applied to an object to be displayed it will be shown as appearing at a visible surface of the object.

It is to be understood that Figs. 3 and 4 are schematic representations of texture data stored in accordance with the present invention. It should also be appreciated that the number of layers is not limited to four as shown, but may be more or less in accordance with the teachings of the present invention.

As another example, a texture data map of layer 100 may be described with y amount of data, or number of cells, for one-foot resolution, a corresponding texture data map of layer 102 may be described with y amount of data, or number of cells, for two-foot resolution, a corresponding texture data map of layer 104 may be described with y amount of data, or number of cells, for four foot resolution, and a corresponding texture data map of layer 106 may be described with y amount of data, or number of cells, for eight foot resolution.

An advantage of the data storage scheme of the present invention is that it permits higher resolution texture to be observed in the vicinity of vehicle 110, such as may be seen by looking directly down from an airplane, while lower resolution texture may be observed in the distance such as looking in the direction of line of sight 112. In order to maintain higher resolution texture in the vicinity of vehicle 110 as it moves through the gaming area, it is necessary to update dynamically the higher resolution texture maps, say at level 100, from bulk memory storage means 20 to working memory means 40 at a faster rate than for lesser resolution texture maps, say at level 106. This memory map update may be accomplished using the techniques and hardware described in conjunction with Figs. 1 and 2.

In accordance with the present invention, higher resolution texture maps may be dynamically updated in real time faster than lower resolution texture maps. Using previous texture storage schemes, in order to update one texture map all other texture maps of the group had to be updated, requiring significant time and/or large amounts of memory to store all modified maps.

Using the teachings of the present invention, the system designer can determine a first range indicative of how far from the vehicle the highest resolution texture will extend, after which first range a second lesser resolution will extend, until after a second range greater than the first range a third still lesser resolution will extend. This pattern may be extended using predetermined ranges for texture transition until the range of sight is exceeded.

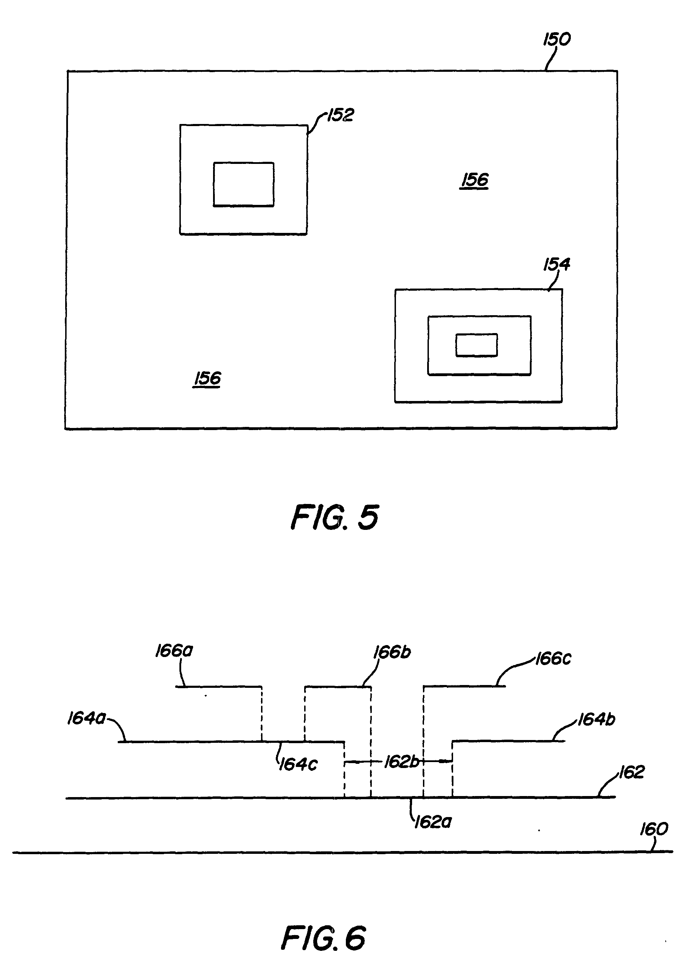

Referring to Fig. 5, a schematic representation of localized areas of higher detail in accordance with the present invention is shown.

Area 150 may be the entire gaming area or a portion thereof. Within area 150 are localized islands, or areas, 152 and 154, not necessarily to scale, that include higher resolution, or detail, texture maps. Areas 152 and/or 154 may represent, for example, an airport, city, or other cultural feature for which a higher resolution is desired, while area 156 of area 150, such as, for example, fields, plains and other areas not having significant, or training-wise important, cultural features, may be represented by texture maps at lesser texture resolution, thus reducing overall texture map storage requirements. This technique of having localized areas of higher detail is especially important in large gaming areas for conserving texture map memory. For example, depending on the flight path, trip from Chicago's O'Hare Airport to Los Angeles Airport may pass over Denver and Las Vegas. It would be desirable to include texture data at the highest resolution for O'Hare and Los Angeles Airport, perhaps a slightly lesser resolution for Denver and Las Vegas airports and cities, while having texture data at a relatively low resolution for the remaining portion of the simulated trip from Chicago to Los Angeles.

Referring to Fig. 6, another schematic representation of localized areas of high detail in accordance with the present invention is shown.

Texture layers 166 and 164 are shown having one or more texture maps missing, such as between portions 164a and 164b of layer 164, and as between portions 166a and 166b, and between portions 166b and 166c of layer 166, thus saving texture map storage. Processor 50 determines which resolution texture map is required. Computer 10 (Fig. 1) informs processor 50 as to which texture maps exist, so that processor 50 will select either a first texture map having a resolution meeting its requirements or an available map having the next highest resolution less than the desired resolution if texture data for the first texture map are unavailable for the desired portion of the gaming area.

For example, if texture data for level 166 is required, then between portion 166a and 166b, texture data 164c from level 164, having a lower resolution than level 166, will be selected, and between portion 166b and 166c, texture data 162a from level 162, having a lower resolution than both level 166 and 164, will be selected. Likewise, if texture data for level 164 is required, then between portion 164a and 164b, texture data 162b from level 162, having a lower resolution than level 164, will be selected.

Thus has been illustrated and described a method and apparatus for supplying multiple resolution texture maps and localized areas of high resolution wherein texture map memory storage may be conserved. Also shown and described is a method and apparatus for dynamically updating on-line texture maps from mass storage to on-line memory of an image generator for real time image generation in order to conserve on-line memory.

While only certain preferred features of the invention have been shown by way of illustration, many modifications and changes will occur to those skilled in the art, all such modifications and changes falling within the scope of the invention as defined by the appended claims.

## Claims

1. An apparatus for use in a real time computer image generation system for storing data representative of texture of an object to be displayed so that during operation of the computer image generation system data of a higher resolution may be dynamically updated at a faster rate than data at a lower resolution for saving memory requirements, said apparatus comprising:
means for storing a predetermined number of texture cells including a first amount of first data for describing texture at a first resolution for a predetermined first area having a predetermined size; and
means for storing the predetermined number of texture cells including a second amount of second data for describing texture at a second resolution for a predetermined second area, the first amount equal to the second amount, and wherein the first area is less than the second area and the first resolution is greater than the second resolution.

2. The apparatus as in claim 1, wherein the second area is four times the size of the first area.

3. The apparatus as in claim 1, wherein the first and second data are stored in the form of magnetic data.

4. The apparatus as in claim 1, further comprising:
means for updating the texture data stored in the storing means in response to predetermined characteristics of a reference point when the reference point moves with respect to a gaming area, whereby dynamic update of texture data memory is obtained.

5. The apparatus as in claim 4, wherein texture data are available at a plurality of respective predetermined levels of detail and the means for updating updates texture data at a higher level of detail at a faster rate than texture data at a lower level of detail is updated.

6. The apparatus of claim 1, wherein texture data for a predetermined area of at least one of the levels of detail is not available for generating the display data, said storing means stores data in response to predetermined characteristics of a reference point with respect to a gaming area; and the second predetermined resolution is the next highest available resolution that is less than the first predetermined resolution for the predetermined area;
said apparatus further comprising
means for processing the selected texture data for generating the display data.

7. The apparatus as in claim 6, wherein the predetermined characteristics are selected from the group consisting of position of the reference point within the gaming area, speed of the reference point, direction of movement of the reference point, maximum range of sight in the gaming area from the reference point and combination thereof.

8. The apparatus of claim 1, wherein the first area is included within the second area.

## Patentansprüche

1. Gerät zur Verwendung in einem Computersystem zur Echtzeit-Bilderzeugung für die Speicherung von Daten, die für die Textur eines anzuzeigenden Objekts repräsentativ sind, in der Weise, daß während des Betriebs des Computersystems zur Bilderzeugung Daten höherer Auflösung mit einer schnelleren Rate dynamisch aktualisiert werden können als Daten mit niedrigerer Auflösung, um den Speicherbedarf zu reduzieren,
wobei das Gerät aufweist:
eine Speichereinrichtung zum Speichern einer vorbestimmten Zahl von Texturzellen, die eine erste Menge von ersten Daten enthalten zur Beschreibung der Textur in einer ersten Auflösung für eine vorbestimmte erste Fläche, die eine vorbestimmte Größe hat, und
eine Speichereinrichtung zum Speichern der vorbestimmten Zahl von Texturzellen, die eine zweite Menge von zweiten Daten enthalten zur Beschreibung der Textur in einer zweiten Auflösung für eine vorbestimmte zweite Fläche, wobei die erste Menge gleich der zweiten Menge ist, und wobei die erste Fläche kleiner ist als die zweite Fläche und die erste Auflösung größer ist als die zweite Auflösung.

2. Gerät nach Anspruch 1, bei dem die zweite Fläche viermal so groß ist wie die erste Fläche.

3. Gerät nach Anspruch 1, bei dem die ersten und die zweiten Daten in Form von magnetischen Daten gespeichert sind.

4. Gerät nach Anspruch 1, ferner mit
einer Aktualisierungseinrichtung zum Aktualisieren der in der Speichereinrichtung gespeicherten Daten nach Maßgabe vorbestimmter Eigenschaften eines Referenzpunkts, wenn der Referenzpunkt sich relativ zu einer Spielfläche bewegt, so daß eine dynamische Aktualisierung des Texturdatenspeichers erreicht wird.

5. Gerät nach Anspruch 4, bei dem die Texturdaten jeweils in einer Mehrzahl von vorbestimmten Detailstufen verfügbar sind und die Aktualisierungseinrichtung Texturdaten einer höheren Detailstufe mit einer Rate aktualisiert, die schneller ist als die Rate, mit der Texturdaten einer niedrigeren Detailstufe aktualisiert werden.

6. Gerät nach Anspruch 1, bei dem für eine vorbestimmte Fläche die Texturdaten wenigstens einer der Detailstufen für die Erzeugung der Anzeigedaten nicht verfügbar sind, die Speichereinrichtung Daten nach Maßgabe von vorbestimmten Eigenschaften eines Referenzpunkts bezüglich einer Splelfläche sperchert, und die zweite vorbestimmte Auflösung die nächsthöhere verfügbare Auflösung ist, die kleiner ist als die erste vorbestimmte Auflösung für die vorbestimmte Fläche,
wobei das Gerät ferner aufweist:
eine Verarbeitungseinrichtung zum Verarbeiten der ausgewählten Texturdaten für die Erzeugung der Anzeigedaten.

7. Gerät nach Anspruch 6, bei dem die vorbestimmten Eigenschaften aus der Gruppe ausgewählt werden, welche die Position des Referenzpunkts innerhalb der Spielfläche, die Geschwindigkeit des Referenzpunkts, die Bewegungsrichtung des Referenzpunkts, den maximalen Sichtbereich in dem der Spielfläche von dem Referenzpunkt aus und die Kombination dieser Eigenschaften enthält.

8. Gerät nach Anspruch 1, bei dem die erste Fläche in der zweiten Fläche enthalten ist.

## Revendications

1. Appareil pour utilisation dans un système de génération d'image informatique en temps réel pour mémoriser des données représentatives de la texture d'un objet à afficher de sorte que pendant l'opération du système de génération d'image informatique, les données à une résolution plus élevée peuvent être dynamiquement mises à jour à une vitesse plus rapide que les données à résolution plus faible pour économiser les besoins en mémoire, ledit appareil comprenant :
un moyen pour mémoriser un nombre prédéterminé de cellules de texture incluant une première quantité de premières données pour décrire la texture à une première résolution pour une première zone prédéterminée ayant une dimension prédéterminée ; et
un moyen pour mémoriser le nombre prédéterminé de cellules de texture incluant une seconde quantité de secondes données pour décrire la texture à une seconde résolution pour une seconde zone prédéterminée, la première quantité étant égale à la seconde quantité, et dans lequel la première zone est plus petite que la seconde zone et la première résolution est plus grande que la seconde résolution.

2. Appareil selon la revendication 1, dans lequel la seconde zone est quatre fois plus grande en taille que la première zone.

3. Appareil selon la revendication 1, dans lequel les premières et secondes données sont mémorisées sous la forme de données magnétiques.

4. Appareil selon revendication 1, comprenant en outre :
un moyen pour mettre à jour les données représentant la texture mémorisées dans le moyen de mémorisation en réponse à des caractéristiques prédéterminées d'un point de référence lorsque le point de référence se déplace par rapport à une zone d'opération, avec pour effet que la mise à jour dynamique de la mémoire de données de texture est obtenue.

5. Appareil selon la revendication 4, dans lequel les données représentant la texture sont disponibles à une pluralité de niveaux de détail prédéterminés respectifs et le moyen pour mettre à jour met à jour les données de texture à un niveau de détail plus élevé et à une vitesse plus rapide que les données représentant la texture à un niveau de détail moins élevé.

6. Appareil selon la revendication 1, dans lequel les données représentant la texture pour une zone prédéterminée d'au moins un des niveaux de détail ne sont pas disponibles pour générer les données à afficher, ledit moyen de mémorisation mémorise les données en réponse aux caractéristiques prédéterminées d'un point de référence par rapport à une zone d'opération ; et la seconde résolution prédéterminée est la résolution disponible la plus élevée suivante qui est plus petite que la première résolution prédéterminée pour la zone prédéterminée ;
ledit appareil comprenant en outre
un moyen pour traiter les données représentant la texture sélectionnées pour générer les données à afficher.

7. Appareil selon la revendication 6, dans lequel les caractéristiques prédéterminées sont sélectionnées à partir du groupe qui est constitué d'une position du point de référence à l'intérieur de la zone d'opération, de la vitesse du point de référence, de la direction du déplacement du point de référence, de la portée visuelle maximale dans la zone d'opération à partir du point de référence et des combinaisons de ceux-ci.

8. Appareil selon la revendication 1, dans lequel la première zone est incluse à l'intérieur de la seconde zone.
